(19) Europäisches Patentamt
European Patent Office
Office européen des brevets

(11) Veröffentlichungsnummer: **0 045 998**
**B1**

(12) # EUROPÄISCHE PATENTSCHRIFT

(45) Veröffentlichungstag der Patentschrift: **31.07.85**

(51) Int. Cl.[4]: **C 08 G 18/80,** C 08 G 18/79, C 09 D 3/72, C 08 G 18/75

(21) Anmeldenummer: **81200894.4**

(22) Anmeldetag: **10.08.81**

(54) **Verfahren zur Herstellung von abspaltfreien Polyurethan-Pulverlacken sowie die danach hergestellten Lacke.**

(30) Priorität: **13.08.80 DE 3030539**

(43) Veröffentlichungstag der Anmeldung: **17.02.82 Patentblatt 82/7**

(45) Bekanntmachung des Hinweises auf die Patenterteilung: **31.07.85 Patentblatt 85/31**

(84) Benannte Vertragsstaaten: **BE CH DE FR GB IT LI LU NL SE**

(56) Entgegenhaltungen:
**FR - A - 2 221 481**
**FR - A - 2 268 840**
**FR - A - 2 298 566**

**Die Akte enthält technische Angaben, die nach dem Eingang der Anmeldung eingereicht wurden und die nicht in dieser Patentschrift enthalten sind.**

(73) Patentinhaber: **CHEMISCHE WERKE HÜLS AG, Postfach 1320, D-4370 Marl 1 (DE)**

(72) Erfinder: **Disteldorf, Josef, Dr., Am Sengenhoff 2a, D-4690 Herne 1 (DE)**
Erfinder: **Gras, Rainer, Dr., An der Ziegelei 91, D-4690 Herne 2 (DE)**
Erfinder: **Schnurbusch, Horst, Dr., Overwegstrasse 36, D-4690 Herne 1 (DE)**

(74) Vertreter: **Stell, Hanna, Dipl.-Chem., RSP PATENTE - PB 15 Postfach 1320, D-4370 Marl 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 045 998 B1

BUNDESDRUCKEREI BERLIN

**Beschreibung**

Die vorliegende Erfindung betrifft ein Verfahren zur Herstellung abspaltfreier Polyurethan-Pulverlacke mit sehr guter Lagerstabilität, die oberhalb 120° C zu harten, schlagzähen, glatten und wetterstabilen Lackfilmen aushärten sowie die danach hergestellten Pulverlacke.

Gemäß DE-OS 5 202 934 ist es bekannt, Pur-Pulverlacke herzustellen, indem latente, gleichzeitig Uretdiongruppen und mit Blockierungsmitteln endständig blockierte Isocyanatgruppen enthaltende Polyisocyanate mit Polyolen gehärtet werden. Aufgrund der verwendeten Blockierungsmittel treten während der Härtung nach wie vor mehr oder minder umfangreiche Umweltbelastungen auf. Außerdem spielt in diesem Fall die Funktionalität der Vernetzerkomponente keine Rolle bei der Lackaufarbeitung.

Auch in der DE-OS 2 420 475 werden Polyurethan-Pulverlacke beschrieben, die durch Reaktion Uretdiongruppen-aufweisender Polyisocyanate mit Polyolen hergestellt werden. Allerdings beschränken sich die Beispiele ausschließlich auf Uretdion-Toluyxlendiisocyanat und Uretdion-Hexamethylendiisocyanat. Außerdem ist es hier notwendig, durch monofunktionelle Reaktionspartner den höherfunktionellen Anteil der Vernetzer zu kompensieren, d. h. daß die Uretdion/Isocyanurat-Gemische zunächst linearisiert werden müssen.

Mit den zum Stand der Technik zählenden Dimerisierungskatalysatoren (tert. Phosphine) war es bis jetzt nicht möglich, ein isocyanuratfreies Uretdion des Isophorondiisocyanats (IPDI) herzustellen. Ein nach der DE-OS 1 670 720 bzw. DE-OS 1 934 763 hergestelltes Uretdion-Isophorondiisocyanat enthält je nach Reaktionsbedingungen noch ca. 20—40 Gew.-% des trimeren IPSI (Isocyanurat- Isophorondiisocyanat) im Gemisch.

Es ist daher nicht überraschend, daß bisher keine abspaltfreien Polyurethan-Pulverlacke bekannt sind, die aus linearen Uretdiongruppen aufweisenden, irreversibel teilweise oder vollständig blockierten Polyisocyanat-Polyadditionsverbindungen und Polyolen aufgebaut sind, da die Voraussetzung für die Herstellung des oben genannten Uretdiongruppen aufweisenden Polyadditionsverbindungen darin bestehen, daß das zur Kettenverländerung mit Diolen eingesetzte Uretdion-Diisocyanat eine NCO-Funktionalität von 2 besitzt. Bei einer NCO-Funktionalität des Uretdion-Diisocyanats von >2 muß bei dessen Umsetzung mit Diolen bereits mit teilweiser Gelierung gerechnet werden.

Für eine gezielte Weiterreaktion mit Diolen zur Herstellung von wertvollen Ausgangsverbindungen für die Polyurethanchemie (Bindemittelkomponente von blockierungsmittelfreien PUR-Pulvern) kommt das bekannte isocyanurathaltige Uredion-Isophorondiisocyanat nicht in Frage.

Die Herstellung der erfindungsgemäßen blockierungsmittelfreien Polyurethan-Pulverlacke wurde erst dadurch möglich, daß es gelang, einen Katalysator für die Dimerisierung von IPDI zu finden, der die Herstellung eines praktisch isocyanuratfreien Uretdion-Isophorondiisocyanats, welches in der Hitze zu über 98% wieder in IPDI rückspaltbar ist, gestattet.

Die Herstellung dieses uretdionhaltigen Isophorondiisocyanats ist nicht Gegenstand dieser Patentanmeldung. Sie erfolgt dadurch, daß man Isophorondiisocyanat gegebenenfalls in einem inerten organischen Lösungsmittel mit Hilfe eines Katalysators der allgemeinen Formel

$$X_mP(NR)_2)_{3-m}$$

wobei

m: 0, 1, 2
X: Cl, OR, R
R: gleiche oder verschiedene Alkyl-, Aralkyl-, gegebenenfalls alkylsubstituierte Cycloalkylreste und 2(R-1H) Bestandteiles eines gemeinsamen Ringes bedeuten

bei Temperaturen von 0—80° C, vorzugsweise 10—30° C, dimerisiert, und das gebildete 1,3-Diazacyclobutadion-2,4 nach einem Umsatz von 5—70, vorzugsweise 20—50%, ohne vorgehende Desaktivierung des Katalysators aus dem Reaktionsgemisch durch Dünnschichtdestillation als Rückstand sowie Katalysator und Monomeres im Destillat isoliert.

Aus diesem reinen uretdionhaltigen Isophorondiisocyanat erfolgt mit Diolen die Polyadduktbildung, die hier ebenfalls nicht beansprucht wird.

Außerdem wurde die Herstellung der erfindungsgemäßen abspaltfreien Polyurethan-Pulverlacke auch erst dadurch möglich, daß es gelang, Polyhydroxylverbindungen herzustellen, die aufgrund ihrer physikalischen und chemischen Kenndaten ausgezeichnete Stabilität, durch die niedrige Schmelzviskosität einen guten Verlauf der Lackfilme gewährleisten.

Es wurde nun gefunden, daß man äußerst hochwertige Polyurethan-Pulverlacke dann erhält, wenn man als Vernetzer bestimmte, isocyanuratfreie uretdiongruppenhaltige Isophorondiisocyanat-Polyadditionsprodukte in Verbindung mit Polyhydroxylverbindungen niedriger Schmelzviskosität und für die Vernetzung des Lackfilms ausreichender OH-Funktionalität einsetzt, die im wesentlichen frei von unter Härtungsbedingungen abspaltbaren, flüchtigen Isocyanat-Blockierungsmitteln sind. Diese erfindungsgemäßen Überzugsmittel besitzen zudem den Vorzug, auch in hohen Schichtdicken Lackierungen zu ergeben, ohne daß Filmstörungen, wie Blasen- und Nadelstichbildungen auftreten. Die Tatsache, daß während des Härtungsprozesses keine Blockierungsmittel frei werden, stellt einen sehr großen Vorteil dar. Die physiologische Reizung des Arbeitspersonals wird vermieden, auf Vorrichtungen zur Beseitigung von Geruchsbelästigungen kann verzichtet werden, das Umweltproblem ist dadurch nahezu unterbunden und außerdem ist der ökonomische Aspekt nicht zu vernachlässigen, nämlich insofern, als alle eingesetzten Komponenten ohne Verlust — Blockierungsmittel! — vollständig im Lackfilm eingebaut werden.

Gegenstand der vorliegenden Erfindung ist daher ein Verfahren zur Herstellung von abspaltfreien Polyurethan-Pulverlacken mit hoher Lagerstabilität, die oberhalb 120°C härtbar sind, auf Basis von linearen, irreversibel teilweise und vollständig blockierten Uretdiongruppen aufweisenden Polyadditionsverbindungen und Polyolen, dadurch gekennzeichnet, daß

a. lineare, irreversibel teilweise oder vollständig mit Monoalkoholen bzw. Monoaminen endständig blockierte, Uretdiongruppenaufweisende Isophorondiisocyanat-Diol-Polyadditionsverbindungen, deren Uretdiongruppen in der Hitze zu >98% in die entsprechenden Isocyanate rückspaltbar sind,

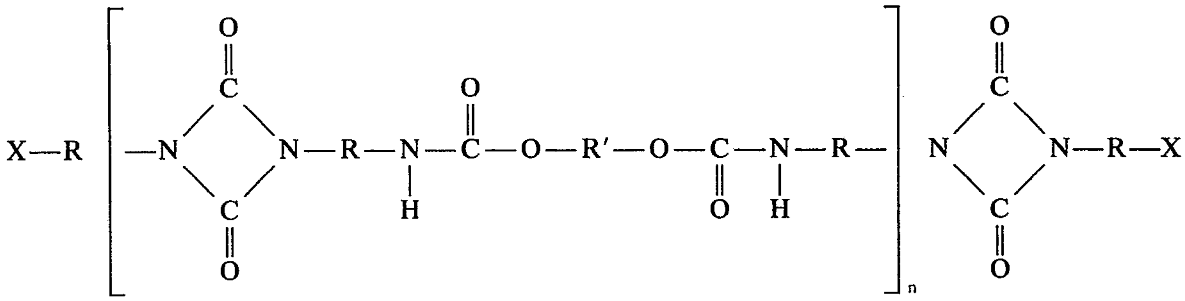

worin

R = 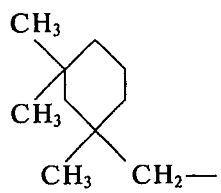

X = —NCO 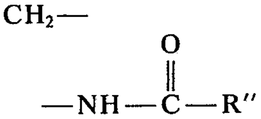

R′ = zweiwertiger aliphatischer, cycloaliphatischer oder araliphatischer Kohlenwasserstoffrest des Diols und n ≧ 1

R″ = Monoalkoholrest oder primärer bzw. sekundärer Monoaminrest mit 1—30 C-Atomen bedeuten,

mit einem NCO/OH-Verhältnis von Uretdion-Isophorondiisocyanat zu Diol von 1 : 0,5 bis 1 : 0,9, insbesondere 1 : 0,6 bis 1 : 0,8, einem Uretdion/Diol-Molverhältnis zwischen 2 : 1 bis 6 : 5, vorzugsweise 3 : 2 bis 5 : 4, Molekulargewichten zwischen 550 und 4300, vorzugsweise zwischen 1500 und 2000, und Schmelzpunkten von ≧70°C bis ≦130°C, vorzugsweise von 85°C bis 120°C,

b. Polyhydroxylverbindungen einer OH-Funktionalität von ≧3,4 bis ≦7, vorzugsweise 3,7 bis 4,5, einem mittleren Molekulargewicht von 2000 bis 5000, vorzugsweise von 2500 bis 4500, OH-Zahlen zwischen 30 und 120 mg KOH/g, vorzugsweise zwischen 40 und 80 mg KOH/g, einer Viskosität von <100 000 mPa · s, vorzugsweise <40 000 mPa · s bei 160°C und einem Schmelzpunkt von ≧70°C bis ≦120°C, vorzugsweise 75°C bis 100°C,

und mit

c. in der Polyurethanchemie üblichen Additiven umgesetzt werden, wobei das Mengenverhältnis von a. und b. so gewählt wird, daß das NCO-OH-Verhältnis bei 0,8 : 1 bis 1,2 : 1 liegt.

Zu den üblichen Additiven gehören beschleunigende Katalysatoren, Pigmente, Farbstoffe und Füllstoffe. Die Katalysatoren werden in Mengen von 0,05—1,5 Gew.-%, vorzugsweise 0,1—0,5 Gew.-%, zugesetzt. Der Füllgrad ist hoch, er kann bis zu 60 Gew.-%, vorzugsweise bis 50 Gew.-%, liegen.

Weiterer Gegenstand der Erfindung sind die wie beansprucht hergestellten Polyurethan-Pulverlacke.

Das isocyanuratfreie Uretdion des Isophorondiisocyanats ist bei Raumtemperatur hochviskos (>$60^6$ mPa · s; bei 60°C/13 · $10^3$ mPa · s, bei 80°C 1,4 · $10^3$ mPa · s). Sein NCO-Gehalt liegt im Bereich von 16,8—18% NCO; d. h. daß mehr oder minder hohe Anteile an Polyuretdionen des IPDI im

Reaktionsprodukt vorliegen müssen. Der Monomergehalt liegt bei 1%. Der NCO-Gehalt des Reaktionsprodukts nach dem Erhitzen auf 180—200° C beträgt 37,1—37,7% NCO.

Dieses Uretdion-Isophorondiisocyanat wird zunächst mit Diolen in einem NCO/OH-Verhältnis von 1 : 0,5 bis 1 : 0,9, vorzugsweise 1 : 0,6—1 : 0,8, umgesetzt; anschließend erfolgt dann die Umsetzung mit den irreversiblen Blockierungsmitteln, wie Monoalkoholen bzw. Monoaminen. Man kann dabei so arbeiten, daß das Diol in einem Guß oder durch allmähliches Eintragen in das Uretdion-Isophorondiisocyanat zugefügt wird. Danach wird mit Monoalkoholen bzw. Monoaminen teilweise oder vollständig blockiert.

Beispiele derartiger Diole sind Ethylenglykol, Propylen-(1,2) und -(1,3)-glykol, 2-Ethyl-hexandiol-(1,3), Hexan-diol-(1,6), Octandiol-(1,8), Neopentylglykol, 1,4-Bishydroxymethylcyclohexan, 3(4), 8(9)-Bishydroxymethyltricyclodecan, 2-Methylpropandiol-(1,3), 3-Methylpentandiol-(1,5), ferner Diethylenglykol, Triethylenglykol, Tetraethylenglykol, Dipropylenglykol und Dibutylenglykol. Bevorzugt findet Butylenglykol-(1,4) als verknüpfendes Diol zum Aufbau Anwendung.

Geeignete einwertige Alkohole sind Methanol, Ethanol, n-Butanol, 2-Ethylhexanol, n-Decanol, Cyclohexanol. Die erfindungsgemäßen Verbindungen eignen sich im besonderen Maß als Bindemittelkomponente für PUR-Pulverlacke, die beim Härten kein Blockierungsmittel abspalten.

Zur Herstellung des Polyadditionsproduktes werden die Reaktionspartner in den angegebenen Mengenverhältnissen gemischt. Im allgemeinen wird die uretdionhaltige Isocyanatkomponente vorgelegt, das Diol zugegeben und anschließend der monofunktionelle Reaktionspartner zugesetzt. Die Reaktion kann in Substanz oder auch in Gegenwart geeigneter Lösungsmittel durchgeführt werden. Geeignete Lösungsmittel sind z. B. Benzol, Toluol, Methyl- bzw. Ethylglykol-acetat, Dimethylformamid, Xylol und andere aromatische oder aliphatische Kohlenwasserstoffe; auch Ketone, wie Aceton, Methylbutylketon, Methylisobutylketon, Cyclohexanon und chlorierte aromatische Kohlenwasserstoffe sowie beliebige Gemische dieser und anderer inerter Lösungsmittel.

Die Umsetzung wird im allgemeinen bei Temperaturen von 50—120° C, vorzugsweise 60—90° C, durchgeführt. Die Reaktionskomponenten werden so lange bei den angegebenen Temperaturen erhitzt, bis alle Glykol-OH-Gruppen unter Bildung von Urethangruppen umgesetzt sind. Dies dauert je nach Reaktionstemperatur 0,5—4 h. Danach wird der Monoalkohol zugefügt und die Reaktionsmischung wird so lange weiter erhitzt, bis pro eingesetztes OH die äquivalente Menge NCO umgesetzt worden ist. Die Aufarbeitung der Reaktionsansätze erfolgt in der Regel so, daß man die Polyuretdion-Polyurethane vom gegebenenfalls mitverwendeten Lösungsmittel befreit. Das kann durch einfaches Entfernen des Lösungsmittels im Vakuum erfolgen. Besonders geeignet zur Beseitigung des Lösungsmittels ist die Schmelzextrusion in einer Ausdampfschnecke.

Es können auch die Isocyanat-Polyaddition beschleunigenden Katalysatoren mitverwendet werden; bevorzugt finden organische Zinnverbindungen, wie Zinn-II-acetat, Zinn-II-octoat, Zinn-II-laurat, Dibutyl-zinndiacetat, Dibutylzinn-dilaurat, Dibutylzinnmaleat oder Dioctylzinndiacetat als Katalysatoren Verwendung. Die Katalysatoren werden im allgemeinen in einer Menge zwischen 0,01 und 0,5 Gew.-%, bezogen auf die Gesamtmenge der eingesetzten Reaktanten, eingesetzt.

Anstelle der Monoalkohole als Blockierungsmittel können auch primäre oder sekundäre Monoamine eingesetzt werden. Als Monoamine eignen sich z. B. n-Propylamin, n-Butylamin, n-Hexylamin, Dibutylamin, Dicyclohexylamin.

Bei der Umsetzung des Uretdion-Isophorondiisocyanat-Diol-Polyadditionsproduktes mit primären oder sekundären Monoaminen empfiehlt es sich das Amin portionsweise zuzugeben, da die $NH_2$/NCO-Reaktion sehr schnell und mit großer Wärmetönung abläuft. Die Isolierung der Reaktionsprodukte erfolgt wie vorher ausgeführt. Der Gesamt-NCO-Gehalt wird durch Titration mit Di-n-butylamin bestimmt, während durch Titration mit Di-sek.-butylamin der Gehalt an freien NCO-Gruppen ermittelt wird.

Die erfindungsgemäß eingesetzten Isophorondiisocyanat-Uretdion-Polyadditionsprodukte sind mahlbar bzw. pulverisierbar und lassen sich in dieser Form in Reaktionspartnern homogen verteilen. Ein großer Vorteil ist, daß die erfindungsgemäß zu verwendenden Uretdion-Polyadditionsprodukte Reaktivpulver darstellen, die mit Reaktionspartnern definierte Vernetzungsreaktionen eingehen können und dabei keine Blockierungsmittel abspalten. Als Reaktionspartner kommen Verbindungen in Frage, die solche funktionellen Gruppen tragen, die sich mit Isocyanatgruppen während des Härtungsprozesses in Abhängigkeit von der Temperatur und Zeit umsetzen, z. B. Hydroxy-, Carboxyl-, Mercapto-, Amino-, Amid-, Urethan- und (Thio)Harnstoffgruppen. Als Polymere können Polymerisate, Polykondensate und Polyadditionsverbindungen eingesetzt werden.

Bevorzugte Komponenten sind in erster Linie Polyether, Polythioether, Polyacetale, Polyesteramide, Epoxidharze mit Hydroxylgruppen im Molekül, Phenol/Formaldehyd-Harze, Aminoplaste und ihre Modifizierungsprodukte mit polyfunktionellen Alkoholen, Anilin/Formaldehyd-Harze, Polyazomethine, Polyurethane, Polyharnstoffe und Polythioharnstoffe, Polysulfonamide, Melaminabkömmlinge, Celluloseester und -ether, teilweise verseifte Homo- und Copolymerisate von Vinylestern, teilweise acetalisierte Polyvinylalkohole, insbesondere aber Polyester und Acrylatharze.

Die erfindungsgemäß eingesetzten hydroxylgruppenhaltigen Polymere haben eine OH-Funktionalität von $\geqq 3{,}4$ bis $\leqq 7$, vorzugsweise 3,7 bis 4,5, Hydroxylzahlen zwischen 30 und 120 mg KOH/g, vorzugsweise zwischen 40 und 100 mg KOH/g, Viskosität $< 100\,000$ mPa · s, vorzugsweise

<40 000 mPa · s bei 160° C und Schmelzpunkte von ≧70° C bis ≦130° C, vorzugsweise 75° C—100° C. In der folgenden Aufzählung werden bevorzugte Komponenten genannt:

Für die Herstellung von Polyestern bevorzugte Carbonsäure können aliphatischer, cycloaliphatischer, aromatischer und/oder heterocyclischer Natur sein und gegebenenfalls, z. B. durch Halogenatome, substituiert und/oder ungesättigt sein. Als Beispiele hierfür seien genannt:

Bernsteinsäure, Adipinsäure, Korksäure, Azelainsäure, Sebacinsäure, Pthalsäure, Terephthalsäure, Isophthalsäure, Trimellithsäure, Pyromellithsäure, Tetrahydrophthalsäure, Hexahydrophthalsäure, Di- und Tetrachlorphthalsäure, Endomethylentetrahydrophthalsäure und ihr Hexachlorderivat, Glutarsäure, Maleinsäure, Fumarsäure bzw. — soweit zugänglich — deren Anhydride, dimere und trimere Fettsäuren, wie Ölsäure, gegebenenfalls in Mischung mit monomeren Fettsäuren, Terephthalsäuredimethylester, Terephthalsäure-bis-glykolester, weiterhin cyclische Monocarbonsäure, wie Benzoesäure, p-tert.-Butylbenzoesäure oder Hexahydrobenzoesäure. Als mehrwertige Alkohole kommen z. B. Ethylenglykol, Propylenglykol-(1,2) und -(1,3), Butylenglykol-(1,4)- und -(2,3), Di-$\beta$-hydroxyethylbutandiol, Hexandiol-(1,6), Octandiol-(1,8), Neopentylglykol, Cyclohexandiol, 1,4-Bis-(hydroxymetehyl)-cyclohexan, 2,2-Bis-(4-hydroxy-cyclohexyl)-propan, 2,2-Bis-(4-[$\beta$-hydroxyethoxy]-phenyl)-propan, 2-Methyl-1,3-propandiol, Glycerin, Trimethylolpropan, Hexantriol-(1,2,6), Butandiol-(1,2,4), Tris-($\beta$-hydroxyethyl)-isocyanurat, Trimethylolethan, Pentaerythrit, Chinit, Manait und Sorbit, Formose und deren Hydroxyalkylierungsprodukte, Methylglykosid, ferner Diethylenglykol, Triethylenglykol, Tetraethylenglykol, Polyethylenglykole, Dipropylenglykol, Tripropylenglykol, Polypropylenglykole, Dibutylenglykol, Polybutylenglykole und Xylylenglykol in Frage. Auch Mono- und Polyester aus Lactonen, z. B. $\varepsilon$-Caprolacton oder Hydroxycarbonsäuren, wie z. B. Hydroxypivalinsäure, $\omega$-Hydroxydecansäure, $\omega$-Hydroxycapronsäure, Thioglykolsäure, können eingesetzt werden; Polyester aus den oben genannten Polycarbonsäuren bzw. deren Derivate und Polyphenolen, wie Hydrochinon, Bisphenol-A, 4,4'-Dihydroxybiphenyl oder Bis-(4-hydroxyphenyl)-sulfon; mit Fettsäuren modifizierte Polyester (Ölalkyde) sowie natürlich vorkommende gesättigte oder ungesättigte Polyester, ihre Abbauprodukte oder Umesterungsprodukte mit Polyolen, wie Rizinusöl, Tallöl, Sojaöl, Leinöl; Polyester der Kohlensäure, die aus Hydrochinon, Diphenylolpropan, p-Xylylenglykol, Ethylenglykol, Butandiol oder Hexandiol-1,6 und anderen Polyolen durch übliche Kondensationsreaktionen, z. B. mit Phosgen oder Diethyl- bzw. Diphenylcarbonat, oder aus cyclischen Carboanten, wie Glykolcarbonat oder Vinylidencarbonat, durch Polymerisation in bekannter Weise erhältlich sind; Polyester der Kieselsäure, Polyester der Phosphonsäure, z. B. aus Methan, Ethan, $\beta$-Chlorethan-, Benzol- oder Styrolphosphonsäure, -phosphonsäurechlorid oder -phosphonsäureester und Polyalkoholen oder Polyphenolen der oben genannten Art; Polyester der phosphorigen Säure aus Phosphorigsäure, Phosphorigsäureestern, -esteramiden oder -esterchloriden und Polyalkoholen, Polyetheralkoholen und Polyphenolen; Polyester der Phosphorsäure, z. B. aus Polyestern der phosphorigen Säure durch Oxidation oder durch Umesterung von Phosphorsäureestern mit Polyalkoholen oder Polyphenolen; Polyester der Borsäure; Polysiloxane, wie z. B. die durch Hydrolyse von Dialkyldichlorsilanen mit Wasser und nachfolgende Behandlung mit Polyalkoholen oder die durch Anlagerung von Polysiloxan-dihydriden an Olefine, wie Allylalkohol oder Acrylsäure, erhältlichen Produkte.

Bevorzugte Polyester sind z. B. auch die Reaktionsprodukte von Polycarbonsäuren und Glycidylverbindungen, wie sie z. B. in der DE-OS 24 10 513 beschrieben sind.

Beispiele für Glycidylverbindungen, die verwendet werden können, sind Ester des 2,3-Epoxy-1-propanols mit monobasischen Säuren, die 4—18 Kohlenstoffatomen haben, wie Glycidylpalmitat, Glycidyllaurat und Glycidylstearat; Alkylenoxide mit 4 bis 18 Kohlenstoffatomen, wie Butylenoxid und Glycidylether, wie Octylglycidylether.

Als Dicarbonsäuren können bei diesem Verfahren sämtliche unter II im folgenden aufgeführte Polycarbonsäuren verwendet werden. Monocarbonsäuren, welche beispielsweise unter III aufgeführt sind, können ebenfalls eingesetzt werden.

Bevorzugte Komponenten sind auch monomere Ester, z. B. Dicarbonsäure-bis-(hydroxyalkohol)ester, Monocarbonsäureester von mehr als 2-wertigen Polyolen und Oligoester, die durch Kondensationsreaktionen aus in der Lackchemie üblichen Rohstoffen hergestellt werden können. Als solche sind z. B. anzusehen:

I. Alkohole mit 2—24, vorzugsweise 2—10 C-Atomen, und 2—6 an nichtaromatischen C-Atomen gebundenen OH-Gruppen, z. B. Ethylenglykol, Propylenglykole, Diethylenglykol, Dipropylenglykol, Butandiole, Neopentylglykol, Hexandiole, Hexantriole, Perhydrobisphenol, Dimethylolcyclohexan, Glycerin, Trimethylolethan, Trimethylolpropan, Pentaerythrit, Dipentaerythrit, Mannit;
II. Di- und Polycarbonsäuren mit 4—36 C-Atomen und 2—4 Carboxylgruppen, sowie deren veresterungsfähige Derivate, wie Anhydride und Ester, z. B. Phthalsäure(anhydrid), Isophthalsäure, Terephthalsäure, Alkyltetrahydrophthalsäure, Endomethylentetrahydrophthalsäureanhydrid, Adipinsäure, Bernsteinsäure, Maleinsäure, Fumarsäure, Dimerfettsäuren, Trimellithsäure, Pyromellithsäure, Azelainsäure;
III. Monocarbonsäuren mit 6—24 C-Atomen, z. B. Caprylsäure, 2-Ethylhexansäure, Benzoesäure, p-tert.-Butylbenzoesäure, Hexahydrobenzoesäure, Monocarbonsäuregemische natürlicher Öle und Fette, wie Cocosölfettsäure, Sojaölfettsäure, Ricinenfettsäure, hydrierte und isomerisierte Fettsäuren, wie »Konjuvandol«-fettsäure, sowie deren Gemische, wobei die Fettsäuren auch als Glyceride einsetzbar sind und unter Umesterung und/oder Dehydratisierung umgesetzt werden können;

IV. einwertige Alkohole mit 1—18 C-Atomen, z. B. Methanol, Ethanol, Isopropanol, Cyclohexanol, Benzylakohol, Isodecanol, Nonanol, Octanol, Oleylalkohol.

Die Polyester können auf an sich bekannte Weise durch Kondensation in einer Inertgasatmosphäre bei Temperaturen von 100—260°C, vorzugsweise 130—220°C, in der Schmelze oder in azeotroper Fahrweise gewonnen werden, wie es z. B. in Methoden der Organischen Chemie (Houben-Weyl), Bd. 14/2, 1—5, 21—23, 40—44 Georg Thieme Verlag, Stuttgart, 1963 oder bei C.R. Martens, Alkyl Resins, 51—59, Reinhold Plastics Appl. Series, Reinhold Publishing Comp., New York, 1961 beschrieben ist.

Bevorzugte Acrylatharze, welche als OH-Komponente verwendet werden können, sind Homo- oder Copolymerisate, wobei z. B. folgende Monomere als Ausgangsprodukte gewählt werden können:

Ester der Acrylsäure und Methacrylsäure mit zweiwertigen, gesättigten, aliphatischen Alkoholen mit 2—4 C-Atomen, wie z. B. 2-Hydroxyäthylacrylat, 2-Hyroxypropylacrylat, 4-Hydroxybutylacrylat und die entsprechenden Methacrylsäureester; Acrylsäure und Methacrylsäure; Acrylsäure und Methacrylsäurealkylester mit 1—18, vorzugsweise 1—8 C-Atomen in der Alkoholkomponente, wie z. B. Methyloacrylat, Ethylacrylat, Propylacrylat, Isopropylacrylat, n-Butylacrylat, tert.-Butylacrylat, 2-Ethylhexylacrylat, Stearylacrylat und die entsprechenden Methacrylsäureester; Acrylsäure- und Methacrylsäurecyclohexylester; Acrylnitril und Methacrylnitril; Acrylamid und Methacrylamid; N-Methoxymethyl(meth)acrylsäureamid.

Besonders bevorzugte Acrylharze sind Copolymere aus

a. 0—50 Gew.-% Monoester der Acryl- oder Methacrylsäure mit zwei- oder mehrwertigen Alkoholen, wie Butandiol-(1,4)-monoacrylat, Hydroxypropyl(meth)acrylat; ferner Vinylglykol, Vinylthioethanol, Allylalkohol, Butandiol-1,4-monovinylether;
b. 5—95 Gew.-% Ester der Acrylsäure oder Methacrylsäure mit einwertigen Alkoholen, die 1 bis 12 Kohlenstoffatome enthalten, wie z. B. Methylmethacrylat, Ethylacrylat, n-Butylacrylat oder 2-Ethylhexylacrylat;
c. 0—50 Gew.-% aromatische Vinylverbindungen, wie Styrol, Methylstyrol oder Vinyltoluol;
d. 0—20 Gew.-% andere Monomere mit funktionellen Gruppen, wie z. B. Acrylsäure, Methacrylsäure, Crotonsäure, Itaconsäure, Maleinsäure, Fumarsäure, Maleinsäureanhydrid, Maleinsäurehalbester, Acrylamid, Methacrylamid, Acrylnitril oder n-Methylol(meth)acrylamid sowie Glycidyl(meth)acrylat, wobei der Anteil der Gruppe a. und/oder d. mindestens 5 Gew.-% beträgt.

Die Acrylatharze können nach den üblichen Methoden hergestellt werden, also durch Lösungs-, Suspensions-, Emulsions- oder Fällungspolymerisation; bevorzugt aber durch Substanzpolymerisation, die ihrerseits mittels UV-Licht initiiert werden kann.

Als weitere Polymerisationsinitiatoren werden die üblichen Peroxide oder Azoverbindungen, wie z. B. Dibenzoylperoxid, tert.-Butylperbenzoat, oder Azodiisobutyronitril verwendet. Das Molekulargewicht kann z. B. mit Schwefelverbindungen, wie tert.-Dodecylmercaptan, geregelt werden.

Bevorzugte Polyether können z. B. durch Polyaddition von Epoxiden, wie Ethylenoxid, Propylenoxid, Butylenoxid, Trimethylenoxid, 3,3-Bis-(chlor-methyl)-oxacyclobutan, Tetrahydrofuran, Styroloxid, dem Bis-(2,3)-epoxypropylether des Diphenylolpropans oder Epichlorhydrin mit sich selbst, z. B. in Gegenwart von $BF_3$, oder durch Anlagerung dieser Epoxide, gegebenenfalls im Gemisch oder nacheinander, an Startkomponenten mit reaktionsfähigen Wasserstoffatomen, wie Alkohole oder Amine, z. B. Wasser, Ethylenglykol, Propylenglykol-(1,3) oder -(1,2), Pentamethylenglykol, Hexandiol, Decamethylenglykol, Trimethylolpropan, 4,4'-Dihydroxydiphenylpropan, Anilin, Ammoniak, Ethanolamin, Ethylendiamin, Di($\beta$-hydroxypropyl)-methylamin, Di-($\beta$-hydroxyethyl)-anilin, Hydrazin, sowie aus hydroxyalkylierten Phenolen, wie z. B. 0,0-Di-($\beta$-hydroxyethyl)-resorcin, hergestellt werden.

Ebenso können hydroxylgruppenhaltige Polyurethane und/oder Polyharnstoffe eingesetzt werden.

Als Polyhydroxylverbindungen können selbstverständlich Gemische mehrerer Stoffe eingesetzt werden.

Zu den Hilfsmitteln in den erfindungsgemäßen pulverförmigen Bindemitteln zählen Pigmente und Füllstoffe sowie Substanzen zur Verbesserung des Verlaufs und zur Vermeidung von Oberflächenstörungen, wie z. B. Silikonöle, p-Toluolsufonsäureamid, flüssige Acrylatharze und Weichmacher sowie Katalysatoren.

Geeignete Katalysatoren sind die, die zur Herstellung der Uretdion-Polyadditionsverbindungen beschrieben wurden.

Die Erweichungspunkte der erfindungsgemäßen Polyurethan-Pulverlack-Komponenten liegen so, daß sie sich bei Temperaturen zwischen etwa 80°C und etwa 120°C mit den zur Herstellung der erfindungsgemäßen Überzugsmittel notwendigen Zusätzen verarbeiten lassen.

Die Erweichungspunkte der Mischungen liegen andererseits so, daß sie zu nichtklumpenden, freifließenden Pulvern mit einer Teilchengröße von etwa 20 bis etwa 120 µm vermahlen werden können.

Die pulverförmigen Überzugsmittel können in geeigneten Mischaggregaten, z. B. in Rührkesseln

oder Mischschnecken (Extrudern), hergestellt werden und zu Pulvern verarbeitet werden, die in üblicher Weise, insbesondere nachdem elektrostatischen Pulverspritzverfahren (EPS-Verfahren) auf Unterlagen aufgetragen werden.

Die Lackfilme härten durch Erhitzen auf Temperaturen oberhalb 120"C, vorzugsweise zwischen etwa 160"C und 200"C rasch zu harten und glatten Überzügen aus.

## Herstellungsbeispiele

### A Isocyanatkomponente

#### 1) Herstellung des Uretdiongruppen-haltigen Isophorondiisocyanats

100 Gew.-Teile IPDI wurden mit 0,1 Gew.-Teile Tris-(dimethyl-amino)-phosphin versetzt und 20 h bei Raumtemperatur stehen gelassen. Der NCO-Gehalt dieses Gemisches nach dieser Zeit betrug 31 Gew.-%, d. h., daß ca. 40 Gew.-% des eingesetzten IPDI reagiert hatten. Anschließend wurde dieses Gemisch der Dünnschichtdestillation bei 130°C und 0,1 Torr (0,133 mbar) unterworfen. Der Rückstand war katalysatorfrei und hatte einen NCO-Gehalt von 17,6%. Wurde der Rückstand 30—60 Minute bei 180°C erhitzt, so stieg der NCO-Gehalt auf 37,1—37,7%. Dieser »sogenannte Heißwert« war ein direktes Maß für den Gehalt an Uretdiongruppen im Reaktionsprodukt.

#### 2) Herstellung der IPDI-Uretdion-Addukte

Allgemeine Herstellungsvorschrift

Das gemäß A 1 hergestellte IPDI-Uretdiondiisocyanat wird vorgelegt, gegebenenfalls im Lösungsmittel wie Aceton, Methylenchlorid, Toluol oder Xylol und auf 50°—100°C erwärmt. Unter starkem Rühren und Inertgasatmosphäre fügt man dem Uretdiondiisocyanat das Glykol so zu, daß die Reaktionstemperatur 110°C nicht übersteigt. Die Umsetzung, die durch titrimetrische NCO-Bestimmung kontrolliert wird, ist nach 2—5 Stunden bei ca. 100°C beendet. Anschließend wird die zur teilweisen oder vollständigen Blockierung der freien NCO-Gruppen erforderliche Menge Alkohol zugefügt und bei 110°C die Reaktion zu Ende geführt. Der Reaktionsablauf wird ebenfalls mittels titrimetrischer NCO-Bestimmung kontrolliert. Nach Abkühlen, gegebenenfalls Absaugen und Trocknen und gegebenenfalls Zerkleinern der Reaktionsprodukte erhält man schwach gelbliche, freifließende Pulver. Die IR-Spektren der Vernetzerprodukte weisen bei 1760—1780 $cm^{-1}$ die charakteristischen, intensiven Bande der Uretdiongruppe auf; je nach Blockierungsgrad sind keine oder nur schwach ausgeprägte NCO-Banden IR-spektroskopisch nachweisbar.

Uretdion-Addukte

| Ausgangskomponenten | | | | Reaktionsprodukte | | | |
|---|---|---|---|---|---|---|---|
| Beispiel A 2 | IPDI-Uretdion Mol | Diol Mol | Alkohol Mol | Gesamt NCO-% | Freie NCO-% | Schmelzpunkt °C | DTA °C |
| | | B* | AH* | | | | |
| 1 | 3 | 2 | 1 | 16,68 | 1,05 | 104—108 | 55—65 |
| | | B* | AH* | | | | |
| 2 | 3 | 2 | 2 | 15,21 | 0,48 | 95—100 | 53—58 |
| | | B* | AH* | | | | |
| 3 | 4 | 3 | 1 | 17,81 | 1,62 | 110—115 | 56—61 |
| | | B* | AH* | | | | |
| 4 | 4,5 | 3,5 | 1 | 17,88 | 1,2 | 107—118 | 62—69 |
| | | B* | AH* | | | | |
| 5 | 4,5 | 3,5 | 2 | 16,2 | 0,2 | 104—110 | 60—70 |
| | | B* | M* | | | | |
| 6 | 4,5 | 3,5 | 2 | 16,8 | 0,4 | 108—117 | 58—67 |
| | | B* | A* | | | | |
| 7 | 4,5 | 3,5 | 2 | 16,7 | 0,3 | 106—111 | 59—68 |
| | | EG* | AH* | | | | |
| 8 | 4,5 | 3,5 | 2 | 16,4 | 0,35 | 108—119 | 61—71 |
| | | HD* | AH* | | | | |
| 9 | 4,5 | 3,5 | 2 | 15,8 | 0,51 | 102—107 | 58—63 |
| | | MP* | AH* | | | | |
| 10 | 4,5 | 3,5 | 2 | 15,7 | 0,41 | 101—109 | 57—66 |
| | | B* | M* | | | | |
| 11 | 4,5 | 3,5 | 1 | 18,1 | 1,3 | 110—115 | 62—78 |

B* = Butandiol-1,4; M* = Methanol; A* = Äthanol; AH* = 2-Äthylhexanol; MP* = 3-Methylpentandiol-1,5; EG = Äthylenglykol;

## B Polyolkomponente

### Allgemeine Herstellungsvorschrift

Die Ausgangskomponenten — Terephthalsäure (Ts), Dimethylterephthalat (DMT), Hexandiol-1,6 (HD), Neopentylglykol (NPG), 1,4-Dimethylolcyclohexan (DMC) und Trimethylolpropan (TMP) — wurden in einen Reaktor gegeben und mit Hilfe eines Ölbades erwärmt. Nachdem die Stoffe zum größten Teil aufgeschmolzen waren, wurden bei einer Temperatur von 160°C 0,05 Gew.-% Di-n-butylzinnoxid als Katalysator zugesetzt. Die erste Methanolabspaltung trat bei einer Temperatur von ca. 170°C auf.

Innerhalb 6—8 Stunden wurde die Temperatur auf 220°—230°C erhöht und innerhalb weiterer 12—15 Stunden die Reaktion zu Ende geführt. Der Polyester wurde auf 200°C abgekühlt und durch Anlegen von Vakuum (1 mm Hg) (1,33 mbar) innerhalb 30—45 Minuten weitgehend von flüchtigen Anteilen befreit. Während der gesamten Reaktionszeit wurde das Sumpfprodukt gerührt und ein schwacher $N_2$-Strom durch das Reaktionsgemisch geleitet.

Folgende Tabelle gibt Polyesterzusammensetzungen und die entsprechenden physikalischen und chemischen Kenndaten wieder.

Polyester

| Ausgangskomponenten | | | | | | | chemische u. phyikalische Kenndaten | | | | |
|---|---|---|---|---|---|---|---|---|---|---|---|
| Beisp. | Ts Mol | DMT Mol | HD Mol | NPG Mol | DMC Mol | TMP Mol | OH-Zahl mg KOH/g | Säurezahl mg KOH/g | Schmelz-punkt °C | DTA °C | Visk. b. 160°C mPa · s |
| 1 | 11 | 11 | 9,75 | 11 | — | 2,9 | 50—55 | 3—4 | ca. 75 | ca. 50 | ~22 000 |
| 2 | 10 | 10 | 6,25 | 10,5 | 2 | 2,9 | 55—60 | 2—4 | ca. 75 | ca. 50 | ~25 000 |
| 3 | 12 | 12 | 8 | 10,25 | 4,5 | 2,9 | 44—48 | 3—4 | ca. 75 | ca. 50 | ~25 000 |
| 4 | — | 9 | — | 4 | 3,75 | 2,5 | 100—105 | <2 | ca. 85 | ca. 59 | ~20 000 |

C) Blockierungsmittelfreie Polyurethan-Pulverlacke

Allgemeine Herstellungsvorschrift

Die gemahlenen Produkte, IPDI-Uretdion-Addukt, Polyester, Verlaufmittel*-Masterbatch, Katalysator*-Masterbatch werden gegebenenfalls mit dem Weißpigment und gegebenenfalls Füllstoffen, in einem Kollergang innig vermischt und anschließend im Extruder bei 100—30°C homogenisiert. Nach dem Erkalten wird das Extrudat gebrochen und mit einer Stiftmühle auf eine Korngröße <100 µm gemahlen. Das so hergestellte Pulver wird mit einer elektrostatischen Pulverspritzanlage bei 60 KV auf entfettete, gegebenenfalls vorbehandelte Eisenbleche appliziert und in einem Umlufttrockenschrank bei Temperaturen zwischen 160° und 200°C eingebrannt.

Die FR-Spektren der Pulverlacke weisen keine NCO-Banden bei 2400 $cm^{-1}$ auf. Die freien NCO-Gruppen haben während des Extrudierprozesses reagiert.

*Verlaufmittel-Masterbatch:
Es werden 10 Gew.-% des Verlaufmittels — ein handelsübliches Coplymeres von Butylacrylat und 2-Äthylhexylacrylat — in dem entsprechenden Polyester in der Schmelze homogenisiert und nach dem Erstarren zerkleinert.

*Katalysator-Masterbatch:
Es werden 5—10 Gew.-% des Katalysators, z. B. Dibutylzinndilaurat, in dem entsprechenden Polyester in der Schmelze homogenisiert und nach dem Erstarren zerkleinert.

Die Abkürzungen in den folgenden Tabellen bedeuten:

| | | |
|---|---|---|
| SD | = | Schichtdicke in µm |
| HK | = | Härte n. König in sec (DIN 53 157) |
| HB | = | Härte n. Buchholz (DIN 53 153) |
| ET | = | Tiefung n. Erichsen in mm (DIN 53 156) |
| GS | = | Gitterschnittprüfung (DIN 53 151) |
| GG 60° | = | Messung des Glanzes n. Gardner (ASTM-D 523) |
| Imp. rev. | = | Impact reverse in inch · lb (g · m) |

## Beispiel 1

### Pigmentierter Lack

Nach den beschriebenen Verfahren wurde der Pulverlack mit folgender Rezeptur hergestellt, appliziert und zwischen 160° und 200° C eingebrannt.

181,34 Gew.-Teile Polyester gemäß Beispiel B 2
598,66 Gew.-Teile Uretdion-Isocyanat gemäß A 21
600,00 Gew.-Teile Weißpigment ($TiO_2$)
75,00 Gew.-Teile Verlaufmittel — Masterbatch
45,00 Gew.-Teile Katalysator — Masterbatch

| Einbrenn-bedingungen | Mechanische Kenndaten | | | | | | |
|---|---|---|---|---|---|---|---|
| Zeit/Temp. | SD | HK | HB | ET | GS | Imp.rev. | GG 60° |
| 8′/200° C | 60—80 | 174 | 91 | 7,5—8,1 | 0 | 60(691) | 89 |
| 10′/200° C | 70—90 | 178 | 100 | 10,0—10,7 | 0 | 80(922) | 91 |
| 15′/200° C | 55—85 | 177 | 111 | 10,5—11,1 | 0 | >82(945) | 90 |
| 15′/180° C | 75—100 | 176 | 100 | 9,2—9,5 | 0 | 60(691) | 92 |
| 20′/180° C | 70—80 | 175 | 91 | 9,7—10,7 | 0 | >82(945) | 91 |
| 25′/180° C | 60—75 | 177 | 111 | 11,5 | 0 | >82(945) | 94 |
| 20′/170° C | 55—85 | 179 | 111 | 8,9—9,6 | 0 | 50(576) | 89 |
| 25′/170° C | 75—90 | 174 | 100 | 10,4—11,1 | 0 | 70(806) | 92 |
| 30′/170° C | 65—80 | 180 | 100 | 10,8—11 | 0 | >82(945) | 91 |
| 30′/160° C | 70 | 178 | 100 | 4,5—5,1 | 0 | 20(230) | 90 |
| 35′/160° C | 70—80 | 176 | 91 | 6,9—7,1 | 0 | 30(346) | 92 |

Beispiel 2

Pigmentierter Lack

Nach den beschriebenen Verfahren wurde der Pulverlack mit folgender Rezeptur hergestellt, appliziert und zwischen 170° und 200°C eingebrannt.

275,8 Gew.-Teile Polyester gemäß Beispiel B 4
504,2 Gew.-Teile Uretdion-Isocyanat gemäß A 21
600,0 Gew.-Teile Weißpigment ($TiO_2$)
75,0 Gew.-Teile Verlaufmittel—Masterbatch
45,0 Gew.-Teile Katalysator—Masterbatch

| Einbrenn-bedingungen Zeit/Temp. | Mechanische Kenndaten SD | HK | HB | ET | GS | Imp.rev. | GG 60° |
|---|---|---|---|---|---|---|---|
| 8'/200°C | 60—90 | 180 | 91 | 7,5—88 | 0 | 50(576) | 94 |
| 10'/200°C | 80—90 | 184 | 100 | 9,4—10,1 | 0 | 70(806) | 90 |
| 15'/200°C | 70—80 | 179 | 100 | 10,2—11,1 | 0 | >82(945) | 91 |
| 15'/180°C | 70—85 | 180 | 100 | 6,8—7,9 | 0 | 40(461) | 89 |
| 20'/180°C | 90—100 | 178 | 100 | 9,4—10,2 | 0 | 70(806) | 91 |
| 25'/180°C | 60—80 | 183 | 111 | 9,9—11 | 0 | >82(945) | 90 |
| 20'/170°C | 70—90 | 184 | 91 | 6,9—7,5 | 0 | 50(576) | 90 |
| 25'/170°C | 80—85 | 179 | 100 | 9,1—9,6 | 0 | 60(691) | 89 |
| 30'/170°C | 60—70 | 181 | 100 | 10,2—10,5 | 0 | >82(945) | 91 |

Beispiel 3

Pigmentierter Lack

Nach den beschriebenen Verfahren wurde der Pulverlack mit folgender Rezeptur hergestellt, appliziert und zwischen 160° und 200° C eingebrannt.

584,8 Gew.-Teile Polyester gemäß Beispiel B 2
195,2 Gew.-Teile Uretdion-Isocyanat gemäß A 22
600,0 Gew.-Teile Weißpigment ($TiO_2$)
75,0 Gew.-Teile Verlaufmittel—Masterbatch
45,0 Gew.-Teile Katalysator—Masterbatch

| Einbrenn-bedingungen Zeit/Temp. | Mechanische Kenndaten | | | | | | |
|---|---|---|---|---|---|---|---|
| | SD | HK | HB | ET | GS | Imp.rev. | GG 60° |
| 8′/200° C | 70—80 | 178 | 91 | 9,1—9,4 | 0 | 50(576) | 91 |
| 10′/200° C | 60—80 | 177 | 100 | 10,6 | 0 | >82(945) | 94 |
| 15′/200° C | 70—90 | 180 | 100 | 10,7—11,1 | 0 | >82(945) | 90 |
| 15′/180° C | 80 | 178 | 100 | 9,0—9,7 | 0 | 60(691) | 94 |
| 20′/180° C | 60—75 | 181 | 100 | 9,7—10,0 | 0 | 80(922) | 92 |
| 25′/180° C | 65—80 | 179 | 111 | 10,7 | 0 | >82(945) | 95 |
| 20′/170° C | 80—90 | 176 | 91 | 8,9—9,7 | 0 | 70(806) | 90 |
| 25′/170° C | 75—95 | 179 | 100 | 10,4—11,1 | 0 | >82(945) | 92 |
| 30′/170° C | 60—80 | 177 | 100 | 10,2—11,4 | 0 | >82(945) | 91 |
| 30′/160° C | 55—75 | 180 | 91 | 4,8—5,1 | 0 | 30(346) | 94 |
| 35′/160° C | 60—75 | 177 | 91 | 7,2—7,5 | 0 | 30(346) | 93 |

Beispiel 4

Pigmentierter Lack

Nach den beschriebenen Verfahren wurde der Pulverlack mit folgender Rezeptur hergestellt, appliziert und zwischen 160° und 200° C eingebrannt.

486,2 Gew.-Teile Polyester gemäß Beispiel B 4
293,8 Gew.-Teile Uretdion-Isocyanat gemäß A 22
600,0 Gew.-Teile Weißpigment ($TiO_2$)
75,0 Gew.-Teile Verlaufmittel—Masterbatch
45,0 Gew.-Teile Katalysator—Masterbatch

| Einbrenn-bedingungen Zeit/Temp. | Mechanische Kenndaten | | | | | | |
|---|---|---|---|---|---|---|---|
| | SD | HK | HB | ET | GS | Imp.rev. | GG 60° |
| 8'/200° C | 70—90 | 184 | 100 | 7,9—9,1 | 0 | 60(691) | 94 |
| 10'/200° C | 80 | 187 | 100 | 10,6—11,5 | 0 | >82(945) | 92 |
| 15'/200° C | 60—70 | 183 | 111 | 10,3—11 | 0 | >82(945) | 93 |
| 15'/180° C | 60—80 | 182 | 101 | 8,2—8,8 | 0 | 50(576) | 90 |
| 20'/180° C | 70—80 | 186 | 91 | 9,9—10,7 | 0 | 70(806) | 94 |
| 25'/180° C | 65—85 | 184 | 111 | 10,2—10,8 | 0 | >82(945) | 92 |
| 20'/170° C | 70—90 | 180 | 91 | 8,4—8,6 | 0 | 40(461) | 92 |
| 25'/170° C | 80—100 | 182 | 111 | 10,5—10,8 | 0 | 70(806) | 89 |
| 30'/170° C | 80 | 180 | 100 | 11,1—11,4 | 0 | >82(945) | 94 |
| 30'/160° C | 70—90 | 181 | 91 | 4,2—4,4 | 0 | 20(230) | 91 |
| 35'/160° C | 60—70 | 186 | 100 | 6,2—6,3 | 0 | 30(346) | 92 |

Beispiel 5

Pigmentierter Lack

Nach den beschriebenen Verfahren wurde der Pulverlack mit folgender Rezeptur hergestellt, appliziert und zwischen 160° und 200° C eingebrannt.

627,9 Gew.-Teile Polyester gemäß Beispiel B 3
152,1 Gew.-Teile Uretdion-Isocyanat gemäß A 23
600,0 Gew.-Teile Weißpigment ($TiO_2$)
75,0 Gew.-Teile Verlaufmittel — Masterbatch
45,0 Gew.-Teile Katalysator — Masterbatch

| Einbrenn-bedingungen Zeit/Temp. | Mechanische Kenndaten SD | HK | HB | ET | GS | Imp.rev. | GG 60° |
|---|---|---|---|---|---|---|---|
| 8'/200° C | 50—80 | 174 | 91 | 7,9—9,1 | 0 | 40(461) | 90 |
| 10'/200° C | 70—90 | 178 | 100 | 9,4—10,7 | 0 | 80(922) | 89 |
| 15'/200° C | 60—70 | 172 | 111 | 10,4—11,1 | 0 | >82(945) | 94 |
| 15'/180° C | 55—75 | 181 | 100 | 9,2—9,2 | 0 | 60(691) | 92 |
| 20'/180° C | 50—70 | 176 | 100 | 10,4—10,6 | 0 | >82(945) | 90 |
| 25'/180° C | 60—80 | 178 | 100 | 10,0—11,0 | 0 | >82(945) | 94 |
| 20'/170° C | 70—90 | 177 | 91 | 8,1—8,6 | 0 | 40(461) | 93 |
| 25'/170° C | 60—70 | 180 | 91 | 9,9—10,5 | 0 | 70(806) | 90 |
| 30'/170° C | 70—80 | 174 | 100 | 10,1—10,8 | 0 | >82(945) | 91 |
| 30'/160° C | 50—60 | 176 | 91 | 5,1—6,1 | 0 | 30(346) | 91 |
| 35'/160° C | 70 | 175 | 91 | 5,9—7,1 | 0 | 40(461) | 94 |

Beispiel 6

Pigmentierter Lack

Nach den beschriebenen Verfahren wurde der Pulverlack mit folgender Rezeptur hergestellt, appliziert und zwischen 160° und 200° C eingebrannt.

608,45 Gew.-Teile Polyester gemäß Beispiel B 2
171,55 Gew.-Teile Uretdion-Isocyanat gemäß A 24
600,00 Gew.-Teile Weißpigment ($TiO_2$)
75,00 Gew.-Teile Verlaufmittel—Masterbatch
45,00 Gew.-Teile Katalysator—Masterbatch

| Einbrenn-bedingungen Zeit/Temp. | Mechanische Kenndaten | | | | | | |
|---|---|---|---|---|---|---|---|
| | SD | HK | HB | ET | GS | Imp.rev. | GG 60° |
| 8'/200° C | 60—90 | 174 | 91 | 8,9—9,4 | 0 | 60(691) | 88 |
| 10'/200° C | 70—80 | 179 | 100 | 10,2—10,4 | 0 | 80(922) | 90 |
| 15'/200° C | 80—100 | 176 | 100 | 9,9—11 | 0 | 80(922) | 92 |
| 15'/180° C | 50—70 | 177 | 100 | 8,7—9,2 | 0 | 50(576) | 93 |
| 20'/180° C | 70—80 | 180 | 91 | 10,0—10,5 | 0 | 70(806) | 89 |
| 25'/180° C | 60—90 | 177 | 111 | 10,2—11,1 | 0 | >82(945) | 90 |
| 20'/170° C | 60—80 | 178 | 91 | 8,4—8,8 | 0 | 40(461) | 94 |
| 25'/170° C | 70—80 | 174 | 100 | 9,2—9,9 | 0 | 70(806) | 90 |
| 30'/170° C | 80 | 179 | 100 | 10,1—10,9 | 0 | >82(945) | 93 |
| 30'/160° C | 50—70 | 174 | 91 | 4,5—5,1 | 0 | 30(346) | 92 |
| 35'/160° C | 70—80 | 179 | 100 | 5,2—6,2 | 0 | 40(461) | 94 |

Beispiel 7

Pigmentierter Lack

Nach den beschriebenen Verfahren wurde der Pulverlack mit folgender Rezeptur hergestellt, appliziert und zwischen 160° und 200° C eingebrannt.

628,44 Gew.-Teile Polyester gemäß Beispiel B 3
151,56 Gew.-Teile Uretdion-Isocyanat gemäß A 24
600,00 Gew.-Teile Weißpigment ($TiO_2$)
75,00 Gew.-Teile Verlaufmittel—Masterbatch
45,00 Gew.-Teile Katalysator—Masterbatch

| Einbrenn-bedingungen Zeit/Temp. | Mechanische Kenndaten SD | HK | HB | ET | GS | Imp.rev. | GG 60° |
|---|---|---|---|---|---|---|---|
| 8′/200° C | 70—90 | 178 | 91 | 8,7—9,2 | 0 | 60(691) | 91 |
| 10′/200° C | 60—80 | 174 | 111 | 9,4—9,9 | 0 | 70(806) | 89 |
| 15′/200° C | 80 | 177 | 100 | 10,1—10,7 | 0 | 82(945) | 92 |
| 15′/180° C | 50—70 | 179 | 100 | 8,9—9,1 | 0 | 50(576) | 90 |
| 20′/180° C | 70—90 | 179 | 91 | 9,2—10,1 | 0 | 80(922) | 88 |
| 25′/180° C | 80—90 | 174 | 111 | 10,7—11,1 | 0 | >82(945) | 94 |
| 20′/170° C | 90 | 179 | 100 | 7,2—8,4 | 0 | 40(461) | 92 |
| 25′/170° C | 70—80 | 177 | 100 | 9,7—10,1 | 0 | >82(945) | 89 |
| 30′/170° C | 60—80 | 174 | 100 | 10,0—11,1 | 0 | >82(945) | 89 |
| 30′/160° C | 50—70 | 175 | 91 | 4,1—4,4 | 0 | 30(346) | 92 |
| 35′/160° C | 70—90 | 178 | 100 | 5,2—5,7 | 0 | 30(346) | 90 |

Beispiel 8

Pigmentierter Lack

Nach den beschriebenen Verfahren wurde der Pulverlack mit folgender Rezeptur hergestellt, appliziert und zwischen 160° und 200° C eingebrannt.

596,98 Gew.-Teile Polyester gemäß Beispiel B 2
183,02 Gew.-Teile Uretdion-Isocyanat gemäß A 25
600,00 Gew.-Teile Weißpigment ($TiO_2$)
75,00 Gew.-Teile Verlaufmittel — Masterbatch
45,00 Gew.-Teile Katalysator — Masterbatch

| Einbrenn-bedingungen Zeit/Temp. | Mechanische Kenndaten SD | HK | HB | ET | GS | Imp.rev. | GG 60° |
|---|---|---|---|---|---|---|---|
| 8'/200° C | 60—80 | 180 | 100 | 9,8—10,2 | 0 | 80(922) | 91 |
| 10'/200° C | 70—90 | 179 | 100 | 10,2—10,8 | 0 | >82(945) | 94 |
| 15'/200° C | 65—80 | 181 | 111 | >11,5 | 0 | >82(945) | 92 |
| 15'/180° C | 70—80 | 182 | 100 | 9,4—9,9 | 0 | 70(806) | 96 |
| 20'/180° C | 80 | 178 | 111 | 10,4—10,8 | 0 | >82(945) | 94 |
| 25'/180° C | 60—80 | 180 | 111 | 10,7—11,4 | 0 | >82(945) | 95 |
| 20'/170° C | 70—90 | 180 | 100 | 9,6—9,7 | 0 | 70(806) | 95 |
| 25'/170° C | 60—80 | 179 | 100 | 10,2—10,7 | 0 | >82(945) | 94 |
| 30'/170° C | 70—80 | 184 | 101 | 10,4—11,2 | 0 | >82(945) | 96 |
| 30'/160° C | 60—70 | 183 | 100 | 5,8—6,2 | 0 | 40(461) | 96 |
| 35'/160° C | 60—70 | 180 | 100 | 6,1—7,0 | 0 | 60(691) | 94 |

## Beispiel 9

### Pigmentierter Lack

Nach den beschriebenen Verfahren wurde der Pulverlack mit folgender Rezeptur hergestellt, appliziert und zwischen 160° und 200° C eingebrannt.

594,4 Gew.-Teile Polyester gemäß Beispiel B 2
185,6 Gew.-Teile Uretdion-Isocyanat gemäß A 25
600,0 Gew.-Teile Weißpigment ($TiO_2$)
75,0 Gew.-Teile Verlaufmittel—Masterbatch
45,0 Gew.-Teile Katalysator—Masterbatch

| Einbrenn-bedingungen Zeit/Temp. | Mechanische Kenndaten SD | HK | HB | ET | GS | Imp.rev. | GG 60° |
|---|---|---|---|---|---|---|---|
| 8'/200° C | 60—80 | 181 | 100 | 9,9—10,2 | 0 | 80(922) | 95 |
| 10'/200° C | 70—90 | 184 | 111 | >11,5 | 0 | >82(945) | 96 |
| 15'/200° C | 60—70 | 182 | 111 | >11,5 | 0 | >82(945) | 96 |
| 15'/180° C | 70 | 180 | 100 | 9,6—9,9 | 0 | 70(806) | 97 |
| 20'/180° C | 70—90 | 179 | 111 | 10,4—11,1 | 0 | >82(945) | 96 |
| 25'/180° C | 60—70 | 183 | 125 | >11,5 | 0 | | 95 |
| 20'/170° C | 60—80 | 184 | 111 | 9,4—9,9 | 0 | 80(922) | 98 |
| 25'/170° C | 50—70 | 186 | 125 | 10,2—10,9 | 0 | >82(945) | 97 |
| 30'/170° C | 60—70 | 179 | 100 | 11,1—11,5 | 0 | >82(945) | 94 |
| 30'/160° C | 50—70 | 180 | 91 | 6,2—6,8 | 0 | 50(576) | 95 |
| 35'/160° C | 60—80 | 183 | 111 | 7,4—7,9 | 0 | 60(691) | 98 |

Beispiel 10

Pigmentierter Lack

Nach den beschriebenen Verfahren wurde der Pulverlack mit folgender Rezeptur hergestellt, appliziert und zwischen 160° und 200° C eingebrannt.

615,7 Gew.-Teile Polyester gemäß Beispiel B 3
164,3 Gew.-Teile Uretdion-Isocyanat gemäß A 25
600,0 Gew.-Teile Weißpigment ($TiO_2$)
75,0 Gew.-Teile Verlaufmittel—Masterbatch
45,0 Gew.-Teile Katalysator—Masterbatch

| Einbrenn-bedingungen Zeit/Temp. | Mechanische Kenndaten SD | HK | HB | ET | GS | Imp.rev. | GG 60° |
|---|---|---|---|---|---|---|---|
| 8′/200° C | 70—90 | 179 | 100 | 8,9—9,9 | 0 | 70(806) | 90 |
| 10′/200° C | 60—80 | 181 | 100 | 10,2—10,8 | 0 | >82(945) | 92 |
| 15′/200° C | 60—90 | 178 | 100 | >11,5 | 0 | >82(945) | 89 |
| 15′/180° C | 65—75 | 179 | 100 | 9,2—9,8 | 0 | 70(806) | 96 |
| 20′/180° C | 80—90 | 84 | 111 | 10,4—10,7 | 0 | >82(945) | 92 |
| 25′/180° C | 60—80 | 179 | 111 | >11,5 | 0 | >82(945) | 94 |
| 20′/170° C | 70—90 | 180 | 91 | 9,2—9,6 | 0 | 60(691) | 94 |
| 25′/170° C | 55—85 | 182 | 100 | 10,4—10,7 | 0 | >82(945) | 94 |
| 30′/170° C | 60—70 | 178 | 100 | 11,1—11,5 | 0 | >82(945) | 95 |
| 30′/160° C | 70—80 | 181 | 91 | 5,1—5,7 | 0 | 40(461) | 92 |
| 35′/160° C | 60—80 | 183 | 100 | 6,1—7,4 | 0 | 60(691) | 96 |

Beispiel 11

Pigmentierter Lack

Nach den beschriebenen Verfahren wurde der Pulverlack mit folgender Rezeptur hergestellt, appliziert und zwischen 160° und 200° C eingebrannt.

498,6 Gew.-Teile Polyester gemäß Beispiel B 4
281,4 Gew.-Teile Uretdion-Isocyanat gemäß A 25
600,0 Gew.-Teile Weißpigment ($TiO_2$)
75,0 Gew.-Teile Verlaufmittel — Masterbatch
45,0 Gew.-Teile Katalysator — Masterbatch

| Einbrenn-bedingungen Zeit/Temp. | Mechanische Kenndaten SD | HK | HB | ET | GS | Imp.rev. | GG 60° |
|---|---|---|---|---|---|---|---|
| 8′/200° C | 60—70 | 186 | 91 | 7,8—8,4 | 0 | 60(691) | 95 |
| 10′/200° C | 70—90 | 184 | 100 | 9,4—10,3 | 0 | 80(822) | 94 |
| 15′/200° C | 65—85 | 188 | 100 | 10,2—11,1 | 0 | > 82(945) | 92 |
| 15′/180° C | 60—80 | 188 | 100 | 8,0—8,8 | 0 | 70(806) | 93 |
| 20′/180° C | 60—80 | 187 | 100 | 9,4—10,1 | 0 | > 82(945) | 90 |
| 25′/180° C | 60—80 | 186 | 111 | 10,0—10,6 | 0 | > 82(945) | 92 |
| 20′/170° C | 70—90 | 180 | 100 | 7,9—8,2 | 0 | 60(691) | 94 |
| 25′/170° C | 80—90 | 184 | 100 | 9,2—9,9 | 0 | 70(806) | 90 |
| 30′/170° C | 60—70 | 185 | 100 | 9,9—10,5 | 0 | 80(922) | 95 |
| 30′/160° C | 70—80 | 186 | 91 | 4,3—5,0 | 0 | 20(230) | 94 |
| 35′/160° C | 75—90 | 184 | 100 | 5,2—5,9 | 0 | 40(461) | 96 |

Beispiel 12

Pigmentierter Lack

Nach den beschriebenen Verfahren wurde der Pulverlack mit folgender Rezeptur hergestellt, appliziert und zwischen 160° und 200° C eingebrannt.

599,7 Gew.-Teile Polyester gemäß Beispiel B 2
180,3 Gew.-Teile Uretdion-Isocyanat gemäß A 26
600,0 Gew.-Teile Weißpigment ($TiO_2$)
75,0 Gew.-Teile Verlaufmittel—Masterbatch
45,0 Gew.-Teile Katalysator—Masterbatch

| Einbrenn-bedingungen Zeit/Temp. | Mechanische Kenndaten SD | HK | HB | ET | GS | Imp.rev. | GG 60° |
|---|---|---|---|---|---|---|---|
| 8'/200° C | 60—80 | 180 | 91 | 8,4—9,2 | 0 | 50(576) | 90 |
| 10'/200° C | 70—80 | 178 | 100 | 10,2—10,5 | 0 | 70(806) | 94 |
| 15'/200° C | 60—80 | 182 | 100 | 10,4—11,1 | 0 | >82(945) | 92 |
| 15'/180° C | 50—70 | 176 | 100 | 9,2—9,4 | 0 | 70(806) | 89 |
| 20'/180° C | 60—70 | 182 | 91 | 10,4—11,2 | 0 | >82(945) | 94 |
| 25'/180° C | 65—80 | 179 | 100 | 10,0—10,9 | 0 | 80(922) | 93 |
| 20'/170° C | 60—70 | 184 | 91 | 8,7—9,2 | 0 | 60(691) | 91 |
| 25'/170° C | 70—90 | 180 | 100 | 9,4—9,9 | 0 | 70(806) | 89 |
| 30'/170° C | 80—95 | 183 | 111 | 10,2—10,5 | 0 | >80(922) | 93 |
| 30'/160° C | 60—80 | 181 | 91 | 4,5—4,8 | 0 | 30(346) | 92 |
| 35'/160° C | 70—80 | 176 | 100 | 5,7—6,5 | 0 | 40(361) | 90 |

Beispiel 13

Pigmentierter Lack

Nach den beschriebenen Verfahren wurde der Pulverlack mit folgender Rezeptur hergestellt, appliziert und zwischen 160° und 200° C eingebrannt.

505,6 Gew.-Teile Polyester gemäß Beispiel B 4
274,4 Gew.-Teile Uretdion-Isocyanat gemäß A 26
600,0 Gew.-Teile Weißpigment ($TiO_2$)
75,0 Gew.-Teile Verlaufmittel — Masterbatch
45,0 Gew.-Teile Katalysator — Masterbatch

| Einbrenn-bedingungen | Mechanische Kenndaten | | | | | | |
|---|---|---|---|---|---|---|---|
| Zeit/Temp. | SD | HK | HB | ET | GS | Imp.rev. | GG 60° |
| 8′/200° C | 70 | 182 | 91 | 8,1—8,8 | 0 | 40(461) | 91 |
| 10′/200° C | 60—90 | 187 | 100 | 9,5—10,0 | 0 | 70(806) | 96 |
| 15′/200° C | 55—80 | 184 | 100 | 10,2—10,9 | 0 | > 82(945) | 94 |
| 15′/180° C | 60—80 | 186 | 100 | 7,9—8,7 | 0 | 40(461) | 94 |
| 20′/180° C | 60—80 | 186 | 91 | 9,0—9,5 | 0 | 70(806) | 92 |
| 25′/180° C | 70—80 | 188 | 100 | 10,2—10,7 | 0 | 80(922) | 94 |
| 20′/170° C | 50—70 | 184 | 100 | 8,1—8,3 | 0 | 50(576) | 95 |
| 25′/170° C | 70—90 | 180 | 100 | 9,4—10,0 | 0 | 60(691) | 91 |
| 30′/170° C | 60—80 | 187 | 111 | 10,2—10,5 | 0 | 70(806) | 94 |
| 30′/160° C | 50—70 | 183 | 91 | 3,9—4,5 | 0 | 20(230) | 90 |
| 35′/160° C | 60—70 | 184 | 91 | 4,7—5,2 | 0 | 40(461) | 92 |

Beispiel 14

Pigmentierter Lack

Nach den beschriebenen Verfahren wurde der Pulverlack mit folgender Rezeptur hergestellt, appliziert und zwischen 160° und 200° C eingebrannt.

598,8 Gew.-Teile Polyester gemäß Beispiel B 2
181,2 Gew.-Teile Uretdion-Isocyanat gemäß A 27
600,0 Gew.-Teile Weißpigment ($TiO_2$)
75,0 Gew.-Teile Verlaufmittel — Masterbatch
45,0 Gew.-Teile Katalysator — Masterbatch

| Einbrenn-bedingungen | Mechanische Kenndaten | | | | | | |
|---|---|---|---|---|---|---|---|
| Zeit/Temp. | SD | HK | HB | ET | GS | Imp.rev. | GG 60° |
| 8′/200° C | 70—80 | 180 | 91 | 8,9—9,1 | 0 | 70(806) | 91 |
| 10′/200° C | 80 | 178 | 100 | 9,8—10,7 | 0 | >82(945) | 94 |
| 15′/200° C | 60—70 | 182 | 100 | 10,2—11,4 | 0 | >82(945) | 92 |
| 15′/180° C | 55—85 | 181 | 100 | 9,2—10 | 0 | 70(806) | 94 |
| 20′/180° C | 60—70 | 179 | 100 | 10,9—11,1 | 0 | >82(945) | 92 |
| 25′/180° C | 70—80 | 178 | 111 | 11,0—11,5 | 0 | >82(945) | 94 |
| 20′/170° C | 60—80 | 180 | 91 | 8,5—9,6 | 0 | 60(691) | 90 |
| 25′/170° C | 65—80 | 184 | 100 | 10,4—10,5 | 0 | 80(922) | 93 |
| 30′/170° C | 70—85 | 182 | 100 | 11,2—11,4 | 0 | >82(945) | 95 |
| 30′/160° C | 50—70 | 178 | 91 | 4,5—5,1 | 0 | 40(461) | 92 |
| 35′/160° C | 80—90 | 179 | 100 | 6,1—6,5 | 0 | 50(576) | 92 |

Beispiel 15

Pigmentierter Lack

Nach den beschriebenen Verfahren wurde der Pulverlack mit folgender Rezeptur hergestellt, appliziert und zwischen 160° und 200° C eingebrannt.

619,6 Gew.-Teile Polyester gemäß Beispiel B 3
160,4 Gew.-Teile Uretdion-Isocyanat gemäß A 27
600,0 Gew.-Teile Weißpigment ($TiO_2$)
75,0 Gew.-Teile Verlaufmittel—Masterbatch
45,0 Gew.-Teile Katalysator—Masterbatch

| Einbrenn-bedingungen Zeit/Temp. | Mechanische Kenndaten SD | HK | HB | ET | GS | Imp.rev. | GG 60° |
|---|---|---|---|---|---|---|---|
| 8′/200° C | 70—80 | 180 | 91 | 8,4—9,6 | 0 | 60(691) | 90 |
| 10′/200° C | 60—70 | 185 | 100 | 9,7—10,3 | 0 | 70(806) | 94 |
| 15′/200° C | 60—70 | 183 | 100 | 10,4—11,1 | 0 | >82(945) | 96 |
| 15′/180° C | 50—80 | 186 | 100 | 8,7—9,1 | 0 | 70(806) | 96 |
| 20′/180° C | 70—90 | 184 | 100 | 10,0—10,4 | 0 | 82(945) | 93 |
| 25′/180° C | 60—80 | 184 | 111 | 10,7—11,5 | 0 | >82(945) | 95 |
| 20′/170° C | 60—80 | 187 | 100 | 7,6—8,9 | 0 | 40(461) | 92 |
| 25′/170° C | 70—80 | 182 | 100 | 9,2—10,0 | 0 | 70(806) | 90 |
| 30′/170° C | 60—70 | 180 | 100 | 10,4—11 | 0 | >82(945) | 97 |
| 30′/160° C | 70—85 | 182 | 91 | 4,2—5,1 | 0 | 30(346) | 93 |
| 35′/160° C | 85—95 | 184 | 100 | 6,1—7,0 | 0 | 50(576) | 94 |

Beispiel 16

Pigmentierter Lack

Nach den beschriebenen Verfahren wurde der Pulverlack mit folgender Rezeptur hergestellt, appliziert und zwischen 170° und 200° C eingebrannt.

501 Gew.-Teile Polyester gemäß Beispiel B 4
279 Gew.-Teile Uretdion-Isocyanat gemäß A 28
600 Gew.-Teile Weißpigment ($TiO_2$)
75 Gew.-Teile Verlaufmittel—Masterbatch
45 Gew.-Teile Katalysator—Masterbatch

| Einbrenn-bedingungen Zeit/Temp. | Mechanische Kenndaten SD | HK | HB | ET | GS | Imp.rev. | GG 60° |
|---|---|---|---|---|---|---|---|
| 8′/200° C | 70—80 | 184 | 91 | 7,9—8,9 | 0 | 50(576) | 92 |
| 10′/200° C | 80—90 | 188 | 100 | 8,8—9,8 | 0 | 70(806) | 90 |
| 15′/200° C | 60—80 | 186 | 100 | 9,5—10,3 | 0 | >82(945) | 94 |
| 15′/180° C | 70—85 | 190 | 100 | 7,7—8,4 | 0 | 40(461) | 94 |
| 20′/180° C | 70—80 | 187 | 91 | 9,2—9,4 | 0 | 60(691) | 90 |
| 25′/180° C | 60—90 | 185 | 111 | 9,7—10,0 | 0 | 80(922) | 95 |
| 20′/170° C | 80—90 | 187 | 100 | 7,9—8,4 | 0 | 50(576) | 92 |
| 25′/170° C | 70—100 | 186 | 91 | 8,0—8,9 | 0 | 50(576) | 94 |
| 30′/170° C | 65—80 | 190 | 100 | 9,7—10,0 | 0 | >82(945) | 93 |
| 30′/160° C | 70—90 | 189 | 91 | 4,1—4,5 | 0 | 20(230) | 93 |
| 35′/160° C | 60—80 | 188 | 100 | 5,7—6,3 | 0 | 30(346) | 92 |

Beispiel 17

Pigmentierter Lack

Nach den beschriebenen Verfahren wurde der Pulverlack mit folgender Rezeptur hergestellt, appliziert und zwischen 160° und 200° C eingebrannt.

590,7 Gew.-Teile Polyester gemäß Beispiel B 2
189,3 Gew.-Teile Uretdion-Isocyanat gemäß A 29
600,0 Gew.-Teile Weißpigment ($TiO_2$)
75,0 Gew.-Teile Verlaufmittel—Masterbatch
45,0 Gew.-Teile Katalysator—Masterbatch

| Einbrenn-bedingungen Zeit/Temp. | Mechanische Kenndaten SD | HK | HB | ET | GS | Imp.rev. | GG 60° |
|---|---|---|---|---|---|---|---|
| 8′/200° C | 60—80 | 179 | 91 | 9,4—10,1 | 0 | 70(806) | 91 |
| 10′/200° C | 60—70 | 177 | 100 | 9,6—10,7 | 0 | >82(945) | 94 |
| 15′/200° C | 60—80 | 180 | 111 | 10,7—11,4 | 0 | >82(945) | 96 |
| 15′/180° C | 55—75 | 174 | 100 | 9,0—9,9 | 0 | 60(691) | 93 |
| 20′/180° C | 70—90 | 179 | 111 | 10,7—11,0 | 0 | >82(945) | 90 |
| 25′/180° C | 60—70 | 173 | 111 | 11,5 | 0 | >82(945) | 95 |
| 20′/170° C | 80 | 180 | 91 | 8,9—9,6 | 0 | 60(691) | 92 |
| 25′/170° C | 60—80 | 176 | 100 | 9,4—10,2 | 0 | 80(922) | 97 |
| 30′/170° C | 70—90 | 179 | 100 | 10,4—11,2 | 0 | >82(945) | 91 |
| 30′/160° C | 70—90 | 177 | 91 | 4,8—5,7 | 0 | 30(346) | 93 |
| 35′/160° C | 60—80 | 175 | 100 | 6,1—7,0 | 0 | 50(576) | 95 |

Beispiel 18

Pigmentierter Lack

Nach den beschriebenen Verfahren wurde der Pulverlack mit folgender Rezeptur hergestellt, appliziert und zwischen 160° und 200° C eingebrannt.

612,3 Gew.-Teile Polyester gemäß Beispiel B 3
167,7 Gew.-Teile Uretdion-Isocyanat gemäß A 29
600,0 Gew.-Teile Weißpigment ($TiO_2$)
75,0 Gew.-Teile Verlaufmittel — Masterbatch
45,0 Gew.-Teile Katalysator — Masterbatch

| Einbrenn-bedingungen Zeit/Temp. | Mechanische Kenndaten SD | HK | HB | ET | GS | Imp.rev. | GG 60° |
|---|---|---|---|---|---|---|---|
| 8'/200° C | 70—90 | 178 | 91 | 8,7—9,5 | 0 | 60(691) | 91 |
| 10'/200° C | 80 | 177 | 100 | 9,4—10,1 | 0 | 80(922) | 94 |
| 15'/200° C | 60—80 | 180 | 100 | 10,7—11,1 | 0 | >82(945) | 90 |
| 15'/180° C | 70—80 | 180 | 100 | 8,1—8,8 | 0 | 40(461) | 94 |
| 20'/180° C | 60—70 | 176 | 100 | 9,2—10,1 | 0 | 70(806) | 90 |
| 25'/180° C | 80—95 | 179 | 100 | 10,2—10,9 | 0 | >82(945) | 94 |
| 20'/170° C | 70—90 | 177 | 91 | 7,9—9,1 | 0 | 30(346) | 92 |
| 25'/170° C | 80—100 | 181 | 100 | 8,8—10,0 | 0 | 70(806) | 96 |
| 30'/170° C | 60—80 | 179 | 100 | 10,0—11,0 | 0 | 82(945) | 94 |
| 30'/160° C | 55—75 | 180 | 91 | 3,8—5,0 | 0 | 20(230) | 91 |
| 35'/160° C | 60—70 | 178 | 100 | 5,1—6,7 | 0 | 40(461) | 93 |

Beispiel 19

Pigmentierter Lack

Nach den beschriebenen Verfahren wurde der Pulverlack mit folgender Rezeptur hergestellt, appliziert und zwischen 160° und 200° C eingebrannt.

610,2 Gew.-Teile Polyester gemäß Beispiel B 2
169,8 Gew.-Teile Uretdion-Isocyanat gemäß A 211
600,0 Gew.-Teile Weißpigment ($TiO_2$)
75,0 Gew.-Teile Verlaufmittel—Masterbatch
45,0 Gew.-Teile Katalysator—Masterbatch

| Einbrenn-bedingungen Zeit/Temp. | Mechanische Kenndaten SD | HK | HB | ET | GS | Imp.rev. | GG 60° |
|---|---|---|---|---|---|---|---|
| 8'/200° C | 50—70 | 179 | 91 | 9,1—9,6 | 0 | 70(806) | 92 |
| 10'/200° C | 60—80 | 174 | 100 | 10,4—10,7 | 0 | >82(945) | 97 |
| 15'/200° C | 50—75 | 180 | 111 | 10,2—11,1 | 0 | >82(945) | 94 |
| 15'/180° C | 60—70 | 173 | 100 | 9,4—10,0 | 0 | 60(691) | 94 |
| 20'/180° C | 60—70 | 178 | 111 | 9,7—10,5 | 0 | >82(945) | 93 |
| 25'/180° C | 70—80 | 177 | 111 | 10,4—11,1 | 0 | >82(945) | 91 |
| 20'/170° C | 70 | 181 | 100 | 8,9—9,9 | 0 | 60(691) | 93 |
| 25'/170° C | 60—70 | 176 | 111 | 10,1—10,3 | 0 | 80(922) | 92 |
| 30'/170° C | 50—80 | 179 | 125 | 10,4—11,5 | 0 | >82(945) | 96 |
| 30'/160° C | 60—70 | 179 | 91 | 4,1—5,1 | 0 | 30(346) | 94 |
| 35'/160° C | 65—80 | 176 | 100 | 5,7—6,8 | 0 | 40(461) | 95 |

Beispiel 20

Pigmentierter Lack

Nach den beschriebenen Verfahren wurde der Pulverlack mit folgender Rezeptur hergestellt, appliziert und zwischen 160° und 200° C eingebrannt.

629,97 Gew.-Teile Polyester gemäß Beispiel B 3
150,03 Gew.-Teile Uretdion-Isocyanat gemäß A 211
600,00 Gew.-Teile Weißpigment ($TiO_2$)
75,00 Gew.-Teile Verlaufmittel — Masterbatch
45,00 Gew.-Teile Katalysator — Masterbatch

| Einbrenn-bedingungen Zeit/Temp. | Mechanische Kenndaten SD | HK | HB | ET | GS | Imp.rev. | GG 60° |
|---|---|---|---|---|---|---|---|
| 8'/200° C | 70—90 | 174 | 91 | 8,7—9,6 | 0 | 60(691) | 91 |
| 10'/200° C | 60—80 | 177 | 100 | 9,3—9,9 | 0 | 60(691) | 93 |
| 15'/200° C | 70 | 181 | 111 | 10,0—10,7 | 0 | >82(945) | 97 |
| 15'/180° C | 70 | 181 | 100 | 8,9—10,0 | 0 | >82(945) | 94 |
| 20'/180° C | 80 | 179 | 111 | 9,7—10,0 | 0 | 80(922) | 92 |
| 25'/180° C | 60—70 | 172 | 125 | 10,1—11,0 | 0 | 82(945) | 96 |
| 20'/170° C | 90 | 180 | 100 | 8,1—9,1 | 0 | 60(691) | 91 |
| 25'/170° C | 60—80 | 180 | 91 | 9,4—10,0 | 0 | 70(806) | 94 |
| 30'/170° C | 70—90 | 177 | 100 | 10,7—11,4 | 0 | >82(945) | 93 |
| 30'/160° C | 65—85 | 176 | 91 | 4,5—6,1 | 0 | 30(346) | 90 |
| 35'/160° C | 70—95 | 179 | 100 | 5,7—6,8 | 0 | 50(576) | 95 |

Die spritzfähigen, abspaltfreien Polyurethan-Pulver wiesen nach 7tägiger Lagerung bei 40° C eine gute bis sehr gute Rieselfähigkeit auf; nach 28tägiger Lagerung noch gute Rieselfähigkeit.

Die Lackfilme waren homogen und nadelstich- und blasenfrei. Die Oberfläche ist sehr gut verlaufen. Es trat kaum Orangenschaleneffekt auf. Je größer die OH-Funktionalität und je geringer der Blockierungsgrad, desto besser die Hydrolysestabilität.

Die einjährige Freibewitterung im Industrieklima führt zu keiner Veränderung der Flexibilität, Härte und Haftung. Die Prüfung im Xenotest 450 LF nach bis zu 3000 Stunden gemäß DIN 53 231 führte zu ausgezeichneten Ergebnissen. Glanz, Härte, Flexibilität erfuhren keine Veränderung.

**Patentansprüche**

1. Verfahren zur Herstellung von abspaltfreien Polyurethan-Pulverlacken mit hoher Lagerstabilität, die oberhalb 120° C härtbar sind, auf Basis von linearen, irreversibel teilweise und vollständig blockierten Uretdiongruppen aufweisenden Polyadditionsverbindungen und Polyolen, dadurch gekennzeichnet, daß

a. lineare, irreversibel teilweise oder vollständig mit Monoalkoholen bzw. Monoaminen endständig blockierte, Uretdiongruppen aufweisende Isophorondiisocyanat-Diol-Polyadditionsverbindungen, deren Uretdiongruppen in der Hitze zu > 98% in die entsprechenden Isocyanate rückspaltbar sind.

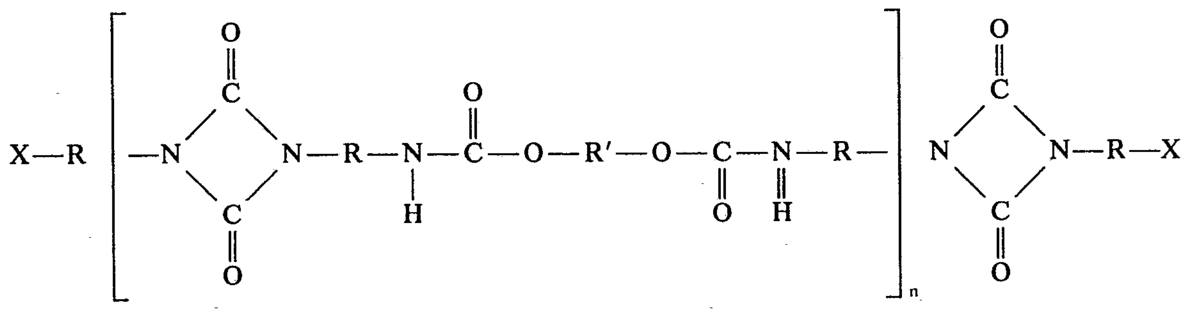

worin

R = 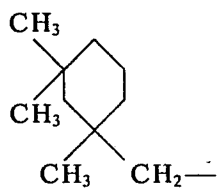

X = —NCO 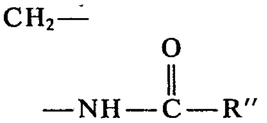

R' =zweiwertiger aliphatischer, cycloaliphatischer oder araliphatischer Kohlenwasserstoffrest des Diols und n $\geqq$ 1

R'' =Monoalkoholrest oder primärer bzw. sekundärer Monoaminrest mit 1—30 C-Atomen bedeuten,

mit einem NCO/OH-Verhältnis von Uretdion-Isophorondiisocyanat zu Diol von 1 : 0,5 bis 1 : 0,9, insbesondere 1 : 0,6 bis 1 : 0,8, einem Uretdion/Diol-Molverhältnis zwischen 2 : 1 bis 6 : 5, vorzugsweise 3 : 2 bis 5 : 4, Molekulargewichten zwischen 1500 und 200 und Schmelzpunkten von $\geqq$ 70° C bis $\leqq$ 130° C, vorzugsweise von 85° C bis 120° C,

mit

b. Polyhydroxylverbindungen einer OH-Funktionalität von $\geqq$ 3,4 bis $\leqq$ 7, vorzugsweise 3,7 bis 4,5, einem mittleren Molekulargewicht von 2000 bis 5000, vorzugsweise von 2500 bis 4500, OH-Zahlen zwischen 30 und 120 mg KOH/g, vorzugsweise zwischen 40 und 80 mg KOH/g, einer Viskosität von < 100 000 mPa · s, vorzugsweise < 40 000 mPa · s, bei 160° C und einem Schmelzpunkt von $\geqq$ 70° C und $\leqq$ 120° C, vorzugsweise 75° C bis 100° C,

und mit

c. in der Polyurethanchemie üblichen Additiven umgesetzt werden, wobei das Mengenverhältnis von a. und b. so gewählt wird, daß das NCO/OH-Verhältnis bei 0,8 : 1 bis 1,2 : 1 liegt.

2. Polyurethan-Pulverlacke hergestellt nach dem Verfahren gemäß Anspruch 1.

**Claims**

1. Process for the preparation of elimination-free polyurethane powder coatings which have a high storage stability and are curable above 120° C and which are based on linear polyaddition compounds, having uretdione groups irreversibly blocked partially and completely, and on polyols, characterised in that

a. linear isophorone diisocyanate/diol polyaddition compounds which have uretdione groups which are irreversibly blockes terminally partially or completely with monoalcohols or monoamines and which uretdionegroups can redissociate when hot into the corresponding isocyanates to an extent of >98%.

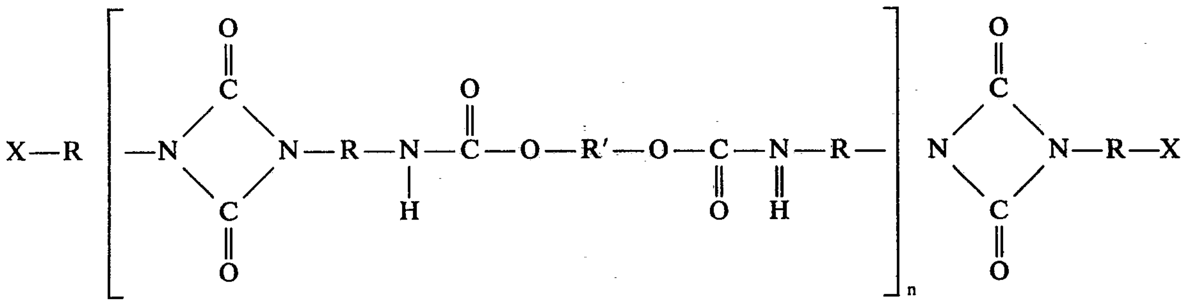

where

R =

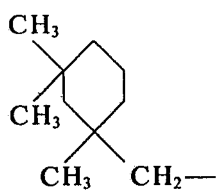

X = —NCO or

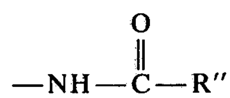

R' =divalent aliphatic, cycloaliphatic or araliphatic hydrocarbon radical of the diol and $n \geqq 1$

R'' =monoalcohol radial or primary or secondary monoamine radical having 1—30 C atoms,

with an NCO/OH ration of the uretdione-isophorone diisocyanate to the diol of 1 : 0.5 to 1 : 0.9, in particular 1 : 0.6 to 1 : 0.8, a uretdione/diol molar ratio between 2 : 1 and 6 : 5, preferably 3 : 2 to 5 : 4, molecular weights between 1500 and 2000, and melting points of ≧ 70° C to ≦ 130° C, preferably 85° C to 120° C, are reacted with

b. polyhydroxy compounds of an OH functionality from ≧ 3.4 to ≦ 7, preferably 3.7 to 4.5, a mean molecular weight of 2000 to 5000, preferably of 2500 to 4500, OH numbers between 30 and 120 mg of KOH/g, preferably between 40 and 80 mg of KOH/g, a viscosity of <100 000 mPa · s, preferably <40 000 mPa · s, at 160° C and a melting point of ≧ 70° C and ≦ 120° C, preferably 75° C to 100° C, and with

c. additives conventional in polyurethane chemistry, the quantitative ratio of a. and b. being selected such that the NCO/OH ration is 0.8 : 1 to 1.2 : 1.

2. Polyurethane powder coatings, prepared by the process according to Claim 1.

**Revendications**

1. Procédé pour la fabrication de vernis en poudre constitués de polyuréthane, exempts de fission, ayant une grande stabilité au magasinage, que l'on peut faire durcir au-dessus de 120° C, à base de composés de polyaddition linéaires, comportant des groupes uretdiones irrévesibles partiellement et totalement bloqués et des polyols, caractérisé en ce que l'on fait réagir:

a. des composés de poly-addition de diisocyanates d'isophoron-diol comportant des groupe uretdiones irréversibles et bloqués en fin de chaîne, partiellement ou totalement, par des mono-alcools ou des mono-amines, dont les groupes uretdiones peuvent être rescindés à la chaleur à raison de plus de 98%, en isocyanates correspondants, répondant à la formule suivante:

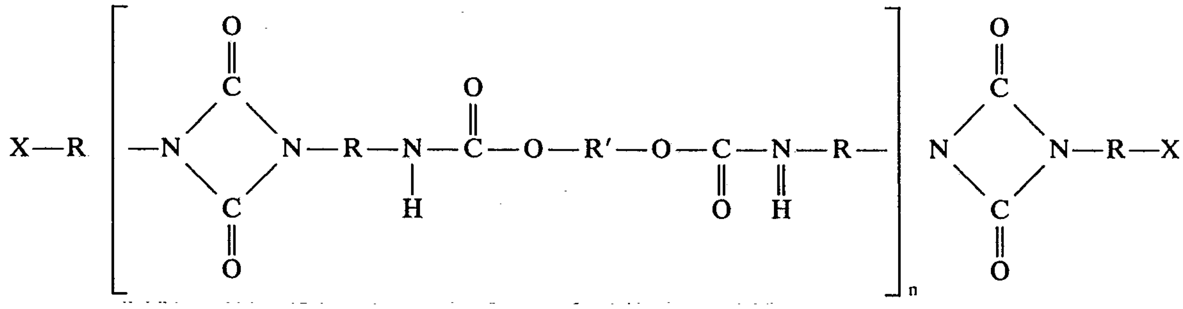

où

R = 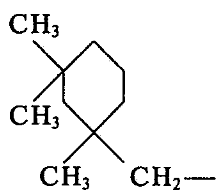

X = —NCO 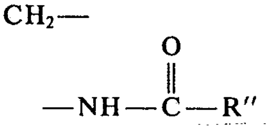

dans laquelle R' est un reste hydrocarbure du diol, bivalent, aliphatique, cycloaliphatique ou araliphatique, et n est ou moins égal à 1, R'' est un reste mono-alcool ou un reste mono-amine primaire ou secondaire avec 1 à 30 atomes de carbonae, avec un rapport NCO/OH entre l'uretdione-diisocyanate d'isophoron et le diol de 1 : 0,5 à 1 : 0,9, notamment 1 : 0,6 à 1 : 0,8, un rapport molaire uretdione/diol de 2 : 1 à 6 : 5, de préference : 2 à 5 : 4, des poids moléculaires se situant entre 1500 et 2000 et des points de fusion au moins égaux à 70° C et au plus égaux à 130° C, de préférence de 85 à 120° C, avec

b. des composés plyhydroxylés dont la fonctionnalité OH est d'au moins 3,4 et ne dépasse pas 7, de préférence de 3,7 à 4,5 dont le poids moléculaire moyen est de 2000 à 5000 de préférence de 2500 à 4500, les indices d'OH se situent entre 30 et 120 mg KOH/g, de préférence entre 40 et 80 mg KOH/g, la viscosité est inférieure à 100 000 mPa · de préféence inférieure à 40 000 mPa · s à 160° C, et le point de fusion d'au moins 70° C à au plus 120° C, de préférence de 75 à 100° C, et avec

c. les additifs courants dans la chimie des polyuréthanes, le rapport quantitatif entre a et b étant choisi tel que le rapport NCO/OH se situe de 0,8 : 1 à 1,2 : 1.

2. Vernis de polyuréthane en poudre fabriqué suivant le procédé de la revendication 1.